# EUROPEAN PATENT APPLICATION

(11) **EP 1 607 255 A2**
(43) Date of publication of application: **21.12.2005**
(21) Application number: 05019077.6
(22) Date of filing: 02.10.2003
(51) Int. Cl.: B60J 1/10, B60J 10/00

(54) **Sealing, trimming or guiding strips**

(30) Priority: 02.10.2002 GB 0222817; 10.03.2003 GB 0305476
(62) Divisional of application: 03799047.0
(71) Applicant: GDX North America Inc., Dover Delaware 19901 (US)
(72) Inventor: Titz, Peter, 41238 Mönchengladbach (DE)
(74) Representative: Foster, Mark Charles

(57) **Abstract**

A sealing, trimming or guiding strip (15) for windows of a motor vehicle comprises a loop formed around the fixed quarter light (11) of the vehicle and a further loop formed around the sliding main window (9) of the rear door of the vehicle. This seal comprises an extruded part (19) extending along both loops to provide a pleasing continuous appearance for the exterior of the vehicle. A portion of the extruded material (19) is cut away and replaced by moulded material moulded onto the extruded part (19) for the portion of the strip into which the quarter light (11) is mounted. A window pane receiving surface having an aperture (208) for securing the window pane receiving surface to the window frame is provided. The window pane receiving surface has embedded therein a rigid member (202) that has an aperture (204) therein that is at least partially aligned with the aperture (208) of the window pane receiving surface.

## Description

### Field of the Invention

The invention relates to sealing, trimming or guiding strips.

Strips embodying the invention, to be described in more detail below by way of example only, are for use in sealing, trimming and guiding window glass in motor vehicle body construction.

### Brief Summary of the Invention

According to the invention, there is provided a sealing, trimming or guiding strip for a window frame, comprising a length of extruded material extending along and forming part of the strip, a portion of the extruded material along part only of the length thereof having been removed and replaced with moulded material which is moulded onto and thereby connected to the extruded material.

According to the invention, there is further provided a method of forming a sealing, trimming or guiding strip for a window frame, comprising extruding a length of material to form part of the strip, removing a portion of the extruded material along part only of the length thereof, and replacing the said portion with moulded material which is moulded onto and thereby connected to the extruded material.

### Brief Description of the Drawings

Sealing, trimming or guiding strips for vehicles and embodying the invention will now be described, by way of example only, with reference to the accompanying diagrammatic drawings in which:
Figure 1 is a side view of a motor vehicle with the rear quarter light encircled;
Figure 2 shows a side view of one of the strips;
Figure 3 shows an enlarged side view of part of the strip of Figure 2 in the region of the rear quarter light of the motor vehicle of Figure 1;
Figure 4 shows a cross-sectional view taken along the line A-A of Figure 3;
Figure 5 shows a cross-sectional view taken along the line B-B of Figure 3;
Figure 6 shows a cross-sectional view of a clip bonded to a pane of glass for cooperation with the structure shown in Figure 5;
Figure 7 shows a cross-section taken along the line C-C of Figure 3;
Figure 8 shows a cross-section taken along the line D-D of Figure 3;
Figure 9 shows a cross-sectional view of an alternative structure to that shown in Figure 5;
Figure 10 shows a cross-sectional view of another alternative structure to the structure shown in Figure 5;
Figure 11 shows a cross-sectional view of a further alternative structure to the structure shown in Figure 5;
Figure 12 shows a view in the region of the rear quarter light of a motor vehicle corresponding to the view shown in Figure 3 but showing the location and orientation of the enlarged base portion of the clip of the Figure 11 embodiment;
Figure 13 shows a cross-sectional view of yet a further alternative structure to the structure shown in Figure 5;
Figure 14 shows a plan view of a rigid planar member used in the Figure 13 embodiment;
Figure 15 shows a plan view of an alternative rigid member to that shown in Figure 14;
Figure 16 shows a side elevational view of a clip for use with the rigid member of Figure 15; and
Figure 17 shows an alternative arrangement of the strip shown in Figure 4.

In general, in the drawings, like elements are designated with the same reference numeral.

### Detailed Description of Embodiments of the Invention

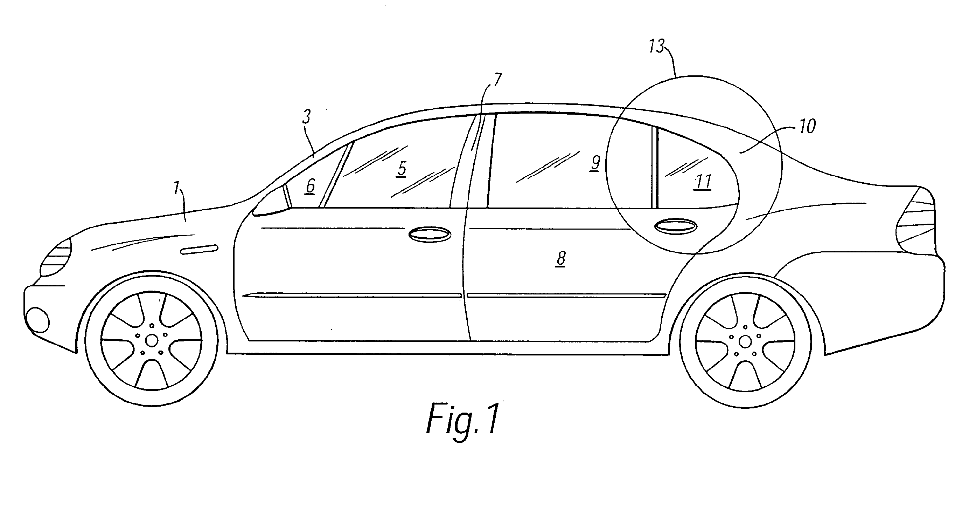

The side elevation of the motor vehicle 1 of Figure 1 shows the vehicle□s A-pillar 3 where the front side window 5 (or front quarter light window 6, if provided) runs adjacent to the vehicle windscreen (not shown). The B-pillar 7 lies between the front side window 5 and the main rear side window 9. It is typical for vehicles having rear doors 8 to include, in addition to the main window 9 (which will normally have a glass pane which may be raised and lowered), a smaller quarter light window 11. The quarter light window 11 generally has a fixed glass pane. The vehicle C-pillar 10 runs down the rear side of the frame of the opening for the door 8.

The present invention is primarily concerned with the structure and fabrication of a sealing, trimming or guiding strip for the frame of the rear main window 9 and quarter light 11, and is particularly concerned with the structure of such a strip in the encircled region 13 of Figure 1.

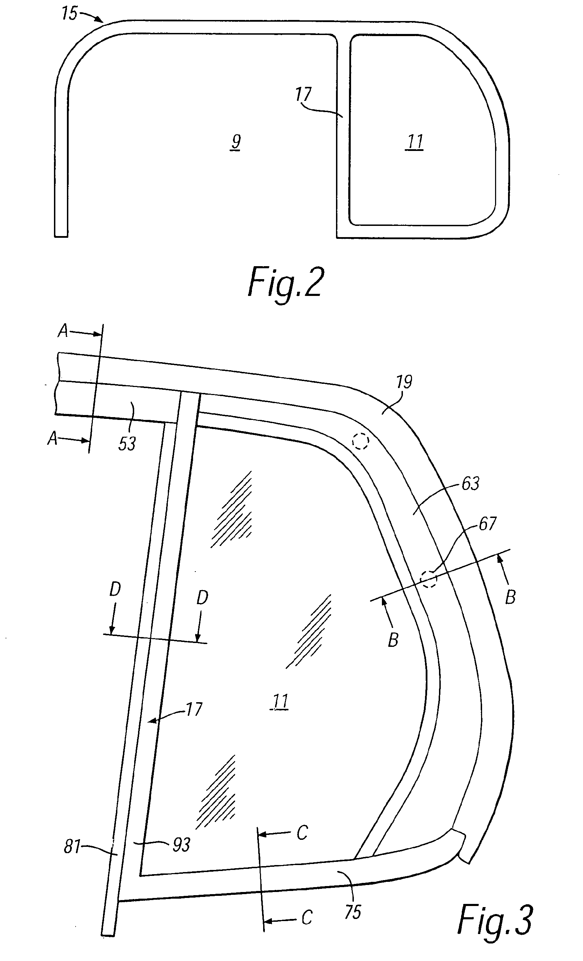

Figure 2 shows a sealing, trimming or guiding strip for mounting in the frame of main window 9 and quarter light 11. The strip, indicated generally at 15, includes a loop portion extending around the quarter light 11 and a portion extending along the top and sides of the main window 9, having a cross-piece 17 common to both portions.

Figure 3 shows in greater detail the strip 15 in the encircled region 13 of Figure 1. The strip 15 has a continuously extruded part 19 that extends continuously along the top of the main window 9 and around the top and rear side of the quarter light 11. The continuously extruded part 19 gives a pleasing external visual appearance with no joins. The construction of the strip 15 in the region 13 will be further understood from the following detailed description of the cross sections A-A, B-B, C-C and D-D.

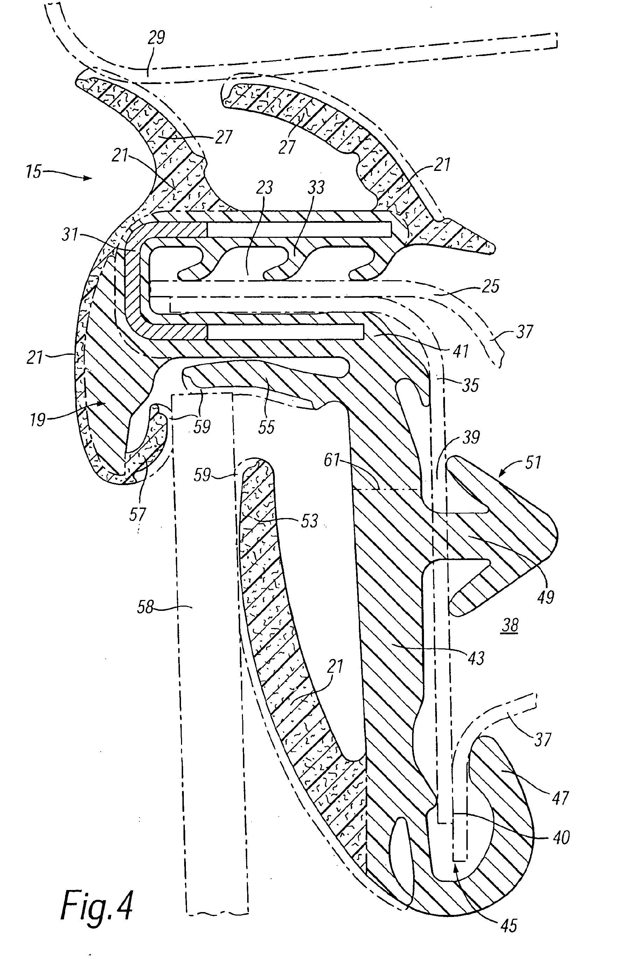

Figure 4 shows a cross section through the strip 15 at the region above the rear main window 9 (along line A-A of Figure 3). The continuously extruded part 19 forms the outer face of the strip, which is visible from the exterior of the vehicle. The continuously extruded part 19 is formed with regions 21 that are of relatively soft material - as indicated by relatively closely-spaced hatching lines. The inner side of the strip 15 defines a channel 23 which embraces a flange 25 formed by inner and outer panels 35,37 of the rear door 8 and which defines the frame for the window 9 and the quarter light 11. The uppermost exterior surface of the channel 23 carries integral resiliently deformable lips 27 which press against a bodywork panel 29 defining the opening for the rear door 8. The bodywork 29 extends along the top of the door opening, substantially parallel to the roof of the vehicle 1.

A channel-shaped reinforcing carrier 31 is integrally embedded within the continuously extruded part 19 during the extrusion process. The reinforcing carrier 31 may be made of metal and may be slotted or slitted to improve its flexibility. For example, it may comprise U-shaped elements arranged next to each other to define a channel, the elements being either integrally connected together by short flexible connecting links or perhaps entirely disconnected from each other. Looped wire may be used instead. Other forms of carrier can also be used.

The continuously extruded part 19 is extruded to provide integral resiliently deformable lips 33 within the channel 23 which help to hold the strip securely in position on the flange 25.

The inner and outer panels 35,37 forming the frame of the window are spot-welded (or otherwise attached together) to form the flange 25, then diverge to form a hollow space 38 and come together again to form a further flange 40 where they are again spot-welded (or attached by some other means).

Extended from (and integrally extruded with) the lower side of the channel 23 is a limb 43 which defines a further channel 45 by means of integrally extruded lip 47. The channel 45 accommodates and resiliently embraces the flange 40. The limb 43 is further clamped to the window frame by means of a resiliently deformable protrusion 49 having an enlarged head portion 51 which is pushed through an aperture 39 in the panel 35 and into the hollow space 38. After passing through the aperture 39, the enlarged head portion 51 resiles and presses against the panel 35 around the edges of the aperture 39.

The continuously extruded part 19 of the strip 15 includes an additional lip 41 which engages the panel 35.

The limb 43 carries a lip 53 extending towards a lip 57 formed integrally on the extruded material defining the channel 23. Lips 53 and 57 together form a channel or recess for receiving the edge of the window pane 58 of the window 9. Lip 53 contacts the inside surface of the window pane 58 when the window is closed. Lip 57 contacts the outer surface of the window pane 58. A further lip 55 engages the top edge of the window pane 58. Each of the lips 53,55 and 57 may be provided with a coating of flocked material 59 at the point where they engage the glass 9. The lip 53 will not be visible from the exterior of the vehicle. Its upper part will be obscured by the continuously extruded part 19, and may further be obscured by a black shading applied to the upper part of the window pane 58 when the window is closed.

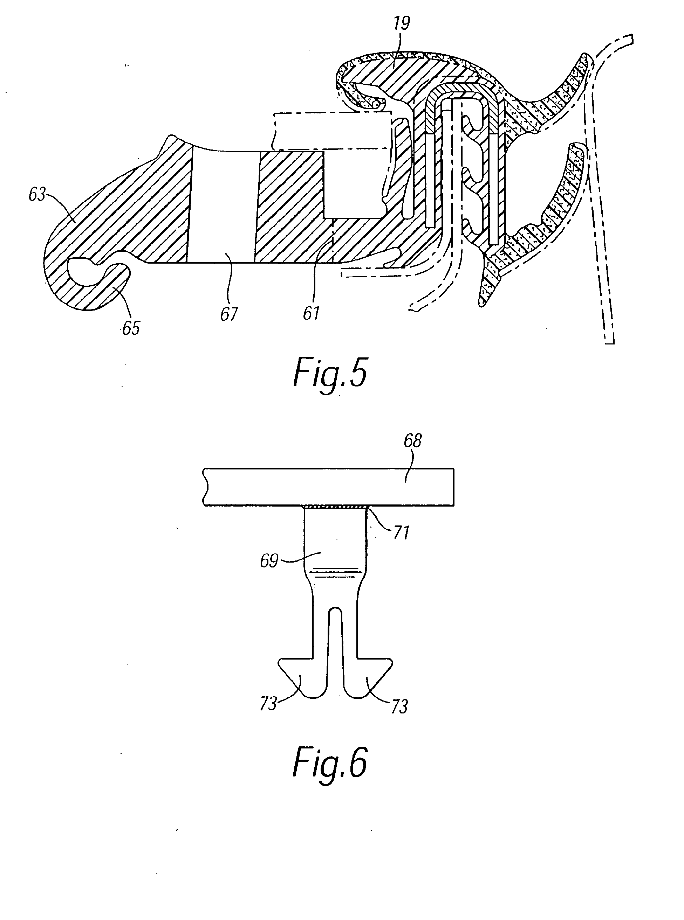

The structure of the strip 15 changes as the strip extends beyond the cross-piece 17 from the main window opening 9 to the quarter light 11. Beyond the cross-piece 17 and extending around the top and rear edge of the quarter light 11, the strip 15 has the form as shown in Figure 5. This form is produced by separating the strip structure shown in Figure 4 along line 61. The material below the line 61 in Figure 4 is removed and may be discarded. A new strip portion 63 (Figure 5) is formed by moulding. The strip portion 63 is attached to the continuously extruded part 19 during the moulding process which forms the strip portion 63. In Figure 5, the structure of the strip to the right of the cut line 61 will not be described further as it is identical to that shown in Figure 4. The strip portion 63 includes a lip 65 similar to the lip 47 shown in Figure 4 which receives and embraces the window frame carried by the vehicle door. An aperture 67 is provided in the strip portion 63. Figure 6 shows the glass pane 68 of the quarter light 11 to which a clip 69 is bonded by means of adhesive 71. The clip 69 passes through the aperture 67 in the strip portion 63 and through a further aperture in the window frame (not shown, but similar to the aperture 39 in Figure 4). The enlarged head portions 73 of the clip 69 deform inwards as they pass through the apertures, whereafter they resile, clamping the glass 11 to the strip part 63 and to the window frame. The quarter light glass 68 is intended to be fixed into position (i.e. it cannot be opened). The co-operation of the clip 69 with the aperture 67 and with the aperture in the window frame makes it difficult to remove the quarter light glass from the door frame, thereby providing a useful security feature.

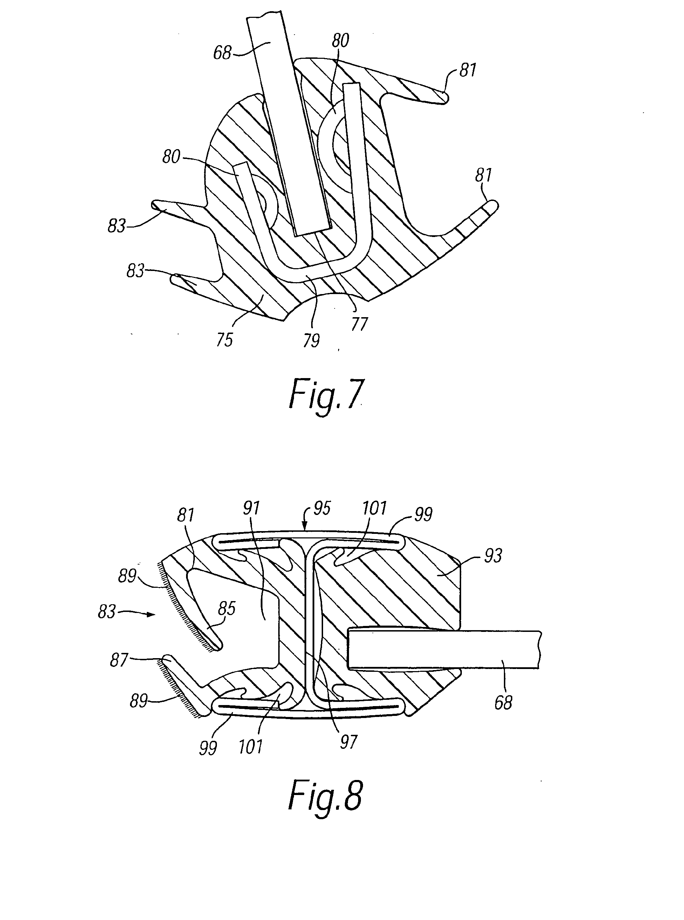

Where it meets the waist line of the door, the extruded part 19 terminates and the strip 15 has the form 75 shown in Figure 7 (cross-section C-C) along the bottom of the quarter light 11. This strip portion 75 is formed of moulded material, and defines a glass-receiving channel 77. Embedded within the strip portion 75 is a reinforcing carrier 79 having a similar construction to the reinforcing carrier 31 shown in Figure 4. However, the reinforcing carrier optionally includes arcuate portions 80 pressed out from the reinforcing carrier. Lips 81 and 83 are formed at opposite sides of the strip part 75 each side of the quarter light 11. The lips 81 and 83 engage the internal surfaces of a rigid channel (not shown) running along the waist line of the door.

Figure 8 shows the structure of the strip 15 at the cross-piece 17 (Figure 2). Along the cross-piece 17, the seal 15 comprises an extruded part 81 including a channel 83 along which the main rear window 9 slides. The mouth of the channel carries an inwardly directed relatively large lip 85 and an outwardly directed relatively small lip 87 which press against the window 9. The surfaces 89 of the lips 85 and 87 which contact the window 9 may be coated with flocked material. Additionally, the base 91 of the channel 83 may also be coated with flocked material.

Along the cross-piece 17, the strip 15 further comprises a channel-shaped moulded part 93 which accommodates the front edge of the quarter light glass 68. The quarter light glass 68 may be fixed with respect to the moulded part 93 by means of adhesive.

The extruded part 81 and the moulded part 93 are accommodated in a rigid division bar 95 of substantially H-shape. The central limb 97 of division bar 95 extends between the extruded part 81 and the moulded part 93. The side pieces 99 of the division bar 95 are accommodated in recesses 101 formed in adjacent portions of the extruded part 81 and the moulded part 93. The division bar 95 is formed by a thin sheet of metal (or other stiff material). In Figure 8, side pieces 99 are formed by a sheet of material folded over itself to form a double layered structure, with the material then extending to form the central limb 97, such that the division bar 95 is formed from a single sheet of material.

During assembly, the quarter light pane 68 is accommodated in the moulded part 93 before the moulded part 93 and the extruded part 81 are fitted into the division bar 95. This sequence enables the sides of the channel of the part 93 to be opened up to receive the pane 68. The division bar 95 is visible from the interior and exterior of the motor vehicle 1, and is typically coloured black to match the colour of the strip 15.

The division bar 95 is mounted at its lower end into the rigid channel (not shown) running along the waist line of the door. At its upper end the division bar 95 passes through a hole in the window frame and is secured by a screw and clip (none of which is shown).

During manufacture and after cutting the continuously extruded part 19 at the line 61 (Figure 4) and discarding the lower part of the limb 43, the remaining extruded material 19 is placed in a mould which then moulds onto the extruded material the moulded part 63 shown in Figure 5, the moulded part 75 shown in Figure 7 and the moulded part 93 as shown in Figure 8, the respective extruded and moulded parts being formed as an integral element. Alternatively, the parts 63,75 and 93 could be formed by separate moulding steps or operations.

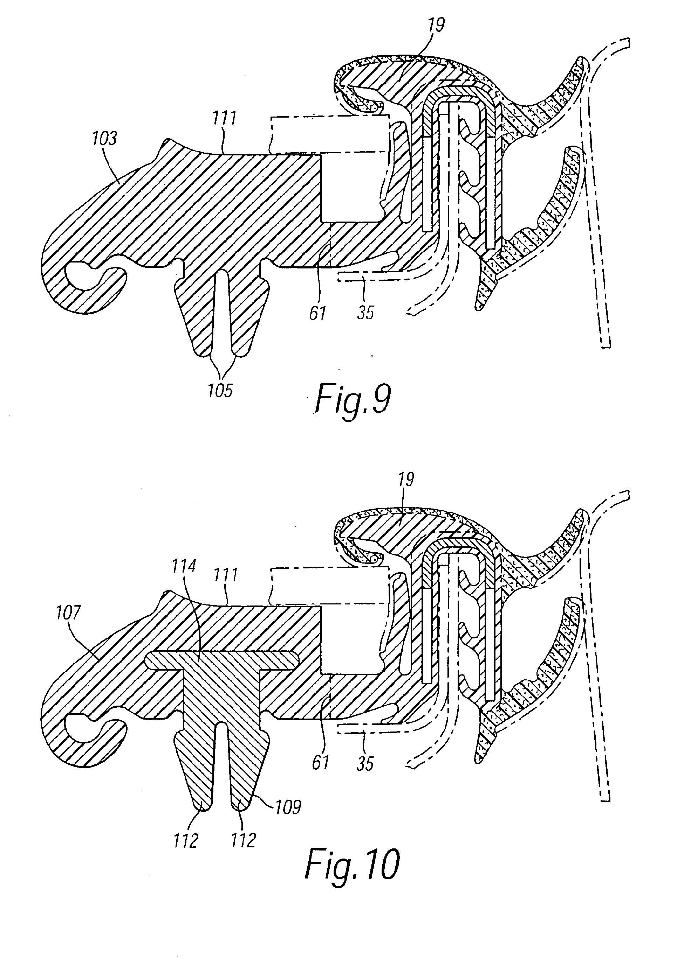

Figure 9 shows an alternative configuration for the moulded part 63 of Figure 5. The alternative part 103 includes integrally moulded clips 105 which pass through an aperture in the window frame and clamp the part 103 to the window frame.

Figure 10 shows another alternative arrangement, where a moulded part 107 has a clip 109 formed of relatively rigid material embedded within the part 107 during moulding of the part 107. The clip 109 passes through an aperture in the door frame to secure the part 107 thereto. The clip 109 comprises resiliently deformable head portions 112 which clamp the part 107 to the window frame panel 35. The opposite end of the clip 109 comprises a generally planar, substantially circular base portion 114.

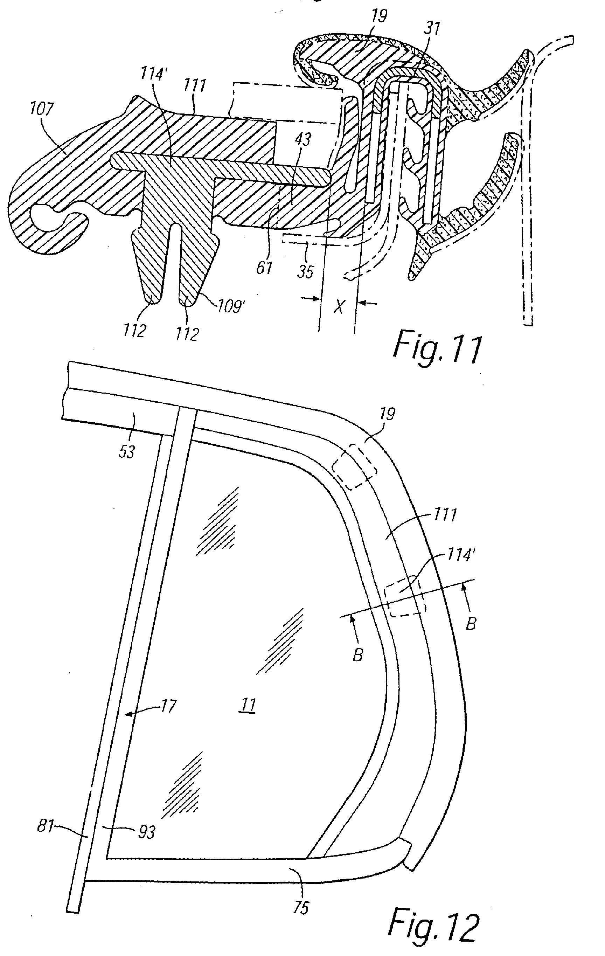

Figure 11 shows a further alternative arrangement corresponding closely to the arrangement of Figure 10. However, in the Figure 11 arrangement the base 114' of the clip 109' is generally planar and substantially trapezium-shaped, as shown by the dashed lines of Figure 12. The base portion 114' extends outwardly from the moulded part 107 so that it overlies the upper part of the limb 43 of the extruded part 19. The distance "X" between the distal end of the base portion 114' and the outer surface of the reinforcing carrier 31 is reduced by the Figure 11 modification, and this increases the amount of force required to detach the seal assembly, comprising the part 107, from the panel 35 (referred to as the "pull-off" force). Advantageously, the pull-off force required may be greater than or equal to 700N. The pull-off force is increased because the extended base portion 114' increases the rigidity of the moulded part 107.

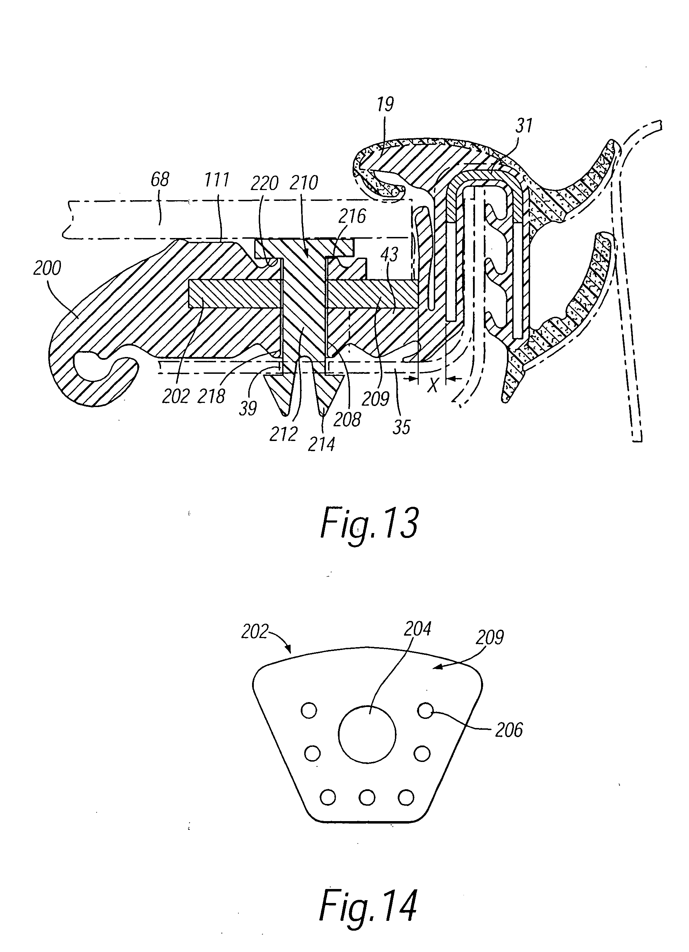

Yet another arrangement of the moulded part (in this embodiment designated 200) is shown in Figure 13.

The general shape of the moulded part 200 is the same as the moulded parts 63, 103 and 107 of the embodiments described above. However, a generally planar, substantially trapezium-shaped member 202 is embedded within the moulded part 200. The member 202 is relatively rigid. The member 202 is shown in more detail in Figure 14. The member 202 comprises a relatively large central circular hole 204 formed therein, which is surrounded by seven smaller circular holes 206. The small holes 206 allow the material of the moulded part 200 to pass therethrough to provide improved securing and location of the member 202. The larger hole 204 is positioned to be aligned with a hole 208 formed through the moulded part 200 from the upper surface, adjacent to the window pane 68, to the lower surface, adjacent to the door panel 35. The wider end 209 of the member 202 is positioned to extend from the moulded part 200 and overlie the limb 45 of the extruded part 19, in a similar manner to the Figure 11 embodiment. The orientation of the member 202 corresponds to the orientation of the base part 114' shown in Figures 11 and 12. The distance "X" between the distal end of the member 202 and the outwardly facing surface of the reinforcing carrier 31 is minimised to provide a high pull-off force, as in the Figure 11 embodiment.

A clip 210 having a cylindrical main body portion 212 sized to be accommodated within the aperture 208 is pushed through the aperture 208 in order to secure the moulded part 200 to the panel 35. Resiliently deformable enlarged head portions 214 clamp the clip 210 to the panel 35 after being pushed through the aperture 39 therein, in cooperation with the enlarged base portion 216 at the opposite end of the clip 210. Lips 218, 220 are formed at the upper and lower surfaces of the moulded part 200 at opposite ends of the aperture 208 which are relatively easily compressible in order to allow for variations in manufacturing tolerances of the door panel 35 and the seal assembly.

In a variation to the Figure 13 and 14 embodiment, a rigid annular insert (not shown) is provided in the aperture 208, such that it acts as a rigid liner, to secure the moulded part 200 more firmly to the panel 35. The annular rigid insert may extend from and be integrally formed with the rigid member 202, or may be separate therefrom.

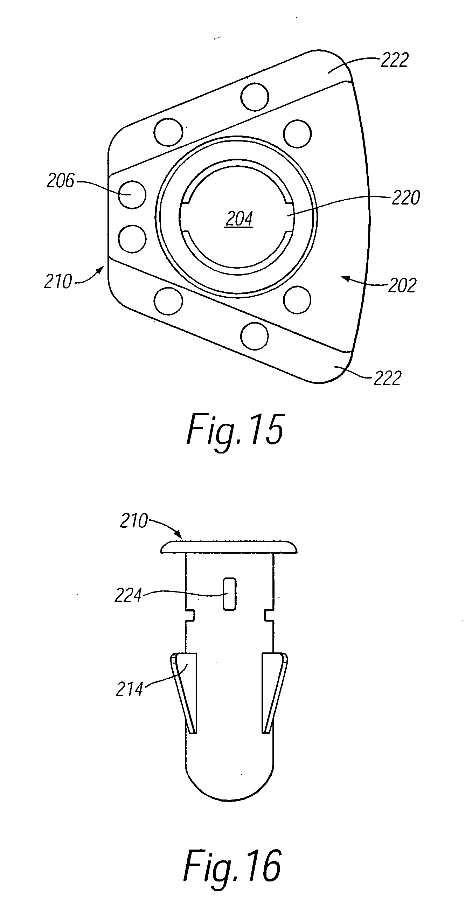

Figures 15 and 16 show respectively, in detail, a rigid member 202 and a clip 210 that may be employed in the Figure 13 and 14 embodiment. The relatively large circular hole 204 in the clip 210 may be provided with two generally rectangular recesses 220 provided at opposite sides of the hole 204. The opposite converging sides of the clip 210 may be provided with chamfered edges 222.

A clip 210 for use with the member 202 is shown in Figure 16. The clip includes protrusions 224 correspondingly sized and positioned for passing through the recesses 220, whereafter relative rotation between the clip 210 and the member 202 prevents relative longitudinal movement between the clip 210 and the member 202. This is in addition to the clamping provided by the head portions 214, which have a different configuration in Figure 16 from that shown in Figure 13, there being no hollow space provided between the head portions 214 in Figure 16.

If one of the arrangements of Figures 9 to 16 is employed, the quarter light glass 68 may advantageously be bonded to the to the surface 111 of the part 103, 107 or 200.

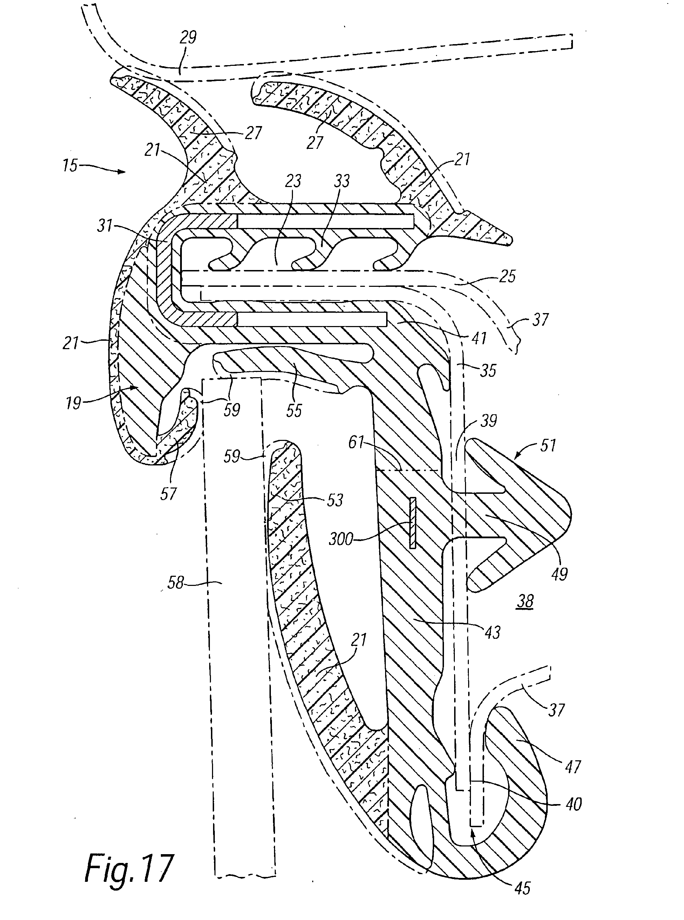

Figure 17 shows a modification to the strip 15 shown in Figure 4. The structure of the strip 15 in Figure 17 is the same as that of the strip shown in Figure 4, with the exception that an additional metal carrier 300 is incorporated in the limb 43, which limb 43 is extruded from (and integrally extruded with) the lower side of the channel 23. The additional metal carrier 300 may, of course comprise materials other than metal. Any suitable rigid material could be employed.

The additional carrier 300 is a planar elongate member which extends into and out of the page of the Figure as shown. The additional carrier 300 is positioned in the region generally above the resiliently deformable protrusion 49, although positioning of the additional carrier 300 at this point is not essential.

The additional carrier 300 increases the longitudinal rigidity of the limb 43.

The additional carrier 300 is integrally embedded within the limb 43 during the extrusion process forming the limb 43 (and other components of the strip 15). The strip 15 will emerge from the extruder as it is formed. The presence of the additional carrier 300, by increasing the longitudinal rigidity, will eliminate or reduce the tendency for the strip 15, and in particular the limb 43, to sag or bend downwards as it emerges from the extruder. This makes it easier to handle the strip 15. For example, it is easy for the strip 15 to be accurately cut to the required size.

The sealing, trimming or guiding strip of the invention is also applicable to the front side window of a vehicle.

This application is a divisional application of EP 03 799 047.0. The following numbered claims are claims of the parent application as originally filed, and are subject-matter of the present application (but not currently claims).
1. A sealing, trimming or guiding strip for a window frame, comprising a length of extruded material extending along and forming part of the strip, a portion of the extruded material along part only of the length thereof having been removed and replaced with moulded material which is moulded onto and thereby connected to the extruded material.
2. A strip according to claim 1, in which the moulded material is extended to form a closed loop.
3. A strip according to claim 2, in which the length of extruded material beyond the said portion thereof extends from the closed loop.
4. A strip according to any preceding claim, in which the moulded material forms a window pane receiving surface.
5. A strip according to any preceding claim, in which the moulded material includes at least one integral formation for securing the moulded part to the window frame.
6. A strip according to claim 5, in which the or each formation comprises an aperture in the moulded part through which a clamping member passes.
7. A strip according to claim 6, in which the clamping member is attached to a pane of glass and the glass is secured to the window frame by the passage of the clamping member through the aperture in the moulded part and through a further aperture in the window frame.
8. A strip according to claim 5, in which the or each formation comprises a clamping member integrally formed with the moulded material for cooperating with corresponding formations in the window frame.
9. A strip according to claim 5, in which the or each formation comprises a clamping member embedded in the moulded material for cooperating with corresponding formations in the window frame.
10. A strip according to claims 6 or 7, further comprising a rigid member embedded in the moulded material and having an aperture therein through which the clamping member passes.
11. A strip according to any preceding claim, in which the extruded material includes a plurality of integral formations for securing the extruded part to the window frame.
12. A strip according to any preceding claim, including an elongate rigid member into which a portion of the strip is fitted.
13. A strip according to claim 12, in which the moulded material is fitted into the rigid member so as to clamp a pane of glass fitted in said moulded material.
14. A strip according to claim 12 or 13, in which the rigid member also accommodates a further length of extruded material having a glass pane receiving channel.
15. A strip according to claim 12, 13 or 14, in which the rigid member is of substantially H shape.
16. A strip according to any one of the preceding claims, in which the extruded material includes a channel for receiving a flange of the window frame, the channel remaining as part of the strip after removal of said portion of the extruded material.
17. A strip according to claim 16, including a rigid reinforcing carrier embedded within the extruded material in the region corresponding to the channel.
18. A strip according to claim 16 or 17, when dependent upon claim 9, wherein the embedded clamping member includes a rigid base portion extending towards the channel so as to increase the force required to remove the strip from the window frame.
19. A strip according to claim 16 or 17, when dependent upon claim 10, wherein the embedded rigid member extends towards the channel so as to increase the force required to remove the strip from the window frame.
20. A strip according to any one of the preceding claims, in which the extruded material includes a limb forming at least a part of a glass pane receiving channel, a portion of the glass pane receiving channel being removed by removal of said portion of the extruded material.
21. A method of forming a sealing, trimming or guiding strip for a window frame, comprising extruding a length of material to form part of the strip, removing a portion of the extruded material along part only of the length thereof, and replacing the said portion with moulded material which is moulded onto and thereby connected to the extruded material.
22. A method according to claim 21, in which the moulded material is extended to form a closed loop.
23. A method according to claim 22, in which the length of extruded material beyond the said portion thereof is extended from the closed loop.
24. A method according to any one of claims 21 to 23, in which the moulded material forms a window pane receiving surface.
25. A method according to any one of claims 21 to 24, in which the moulded material includes at least one integral formation for securing the moulded part to the window frame.
26. A method according to claim 25, in which the or each formation comprises an aperture in the moulded part through which a clamping member passes.
27. A method according to claim 26, in which the clamping member is attached to a pane of glass and the glass is secured to the window frame by the passage of the clamping member through the aperture in the moulded part and through a further aperture in the window frame.
28. A method according to claim 25, in which the or each formation comprise s a clamping member integrally formed with the moulded material for cooperating with corresponding formations in the window frame.
29. A method according to claim 25, in which the or each formation comprises a clamping member embedded in the moulded material for cooperating with corresponding formations in the window frame.
30. A method according to claims 26 or 27, wherein a rigid member is embedded in the moulded material and has an aperture therein through which the clamping member passes.
31. A method according to any one of claims 21 to 30, in which the extruded material includes a plurality of integral formations for securing the extruded part to the window frame.
32. A method according to any one of claims 21 to 31, including providing an elongate rigid member into which a portion of the method is fitted.
33. A method according to claim 32, in which the moulded material is fitted into the rigid member so as to clamp a pane of glass fitted in said moulded material.
34. A method according to claim 32 or 33, in which the rigid member also accommodates a further length of extruded material having a glass pane receiving channel.
35. A method according to claim 32, 33 or 34, in which the rigid member is of substantially H shape.
36. A method according to any one of claims 21 to 35, in which the extruded material is provided with a channel for receiving a flange of the window frame, the channel remaining as part of the method after removal of said portion of the extruded material.
37. A method according to claim 36, including embedding a rigid reinforcing carrier within the extruded material in the region corresponding to the channel.
38. A method according to claim 36 or 37, when dependent upon claim 29, wherein the embedded clamping member includes a rigid base portion extending towards the channel so as to increase the force required to remove the strip from the window frame.
39. A method according to claim 36 or 37, when dependent upon claim 30, wherein the embedded rigid member extends towards the channel so as to increase the force required to remove the strip from the window frame.
40. A method according to any one of claims 21 to 39, in which the extruded material is provided with a limb forming at least a part of a glass pane receiving channel, a portion of the glass pane receiving channel being removed by removal of said portion of the extruded material.
41. A method according to claim 40, in which the limb has an embedded rigid member therein for reducing the tendency for the limb to bend as it emerges from an extruder device used to form the strip.
42. A strip according to claim 20, wherein the limb has an embedded rigid member therein for reducing the tendency for the limb to bend as it emerges from an extruder device used to form the strip.

## Claims

1. A sealing, trimming or guiding strip for a window frame, comprising a window pane receiving surface having an aperture (208) for securing the window pane receiving surface to the window frame, the window pane receiving surface further having embedded therein a rigid member (202) that has an aperture (204) therein that is at least partially aligned with the aperture (208) of the window pane receiving surface.

2. A sealing, trimming or guiding strip for a window frame, comprising a length of extruded material (19) extending along and forming part of the strip, a portion of the extruded material along part only of the length thereof having been removed and replaced with moulded material (200) which is moulded onto and thereby connected to the extruded material (19) wherein the moulded material (200) forms a window pane receiving surface and includes an aperture (208) for securing the window pane receiving surface to the window frame and wherein the strip further comprises a rigid member embedded in the moulded material and having an aperture (204) therein in at least partial alignment with the aperture (208) in the moulded material.

3. A strip according to claim 1 or 2, comprising a clamping member (210) which passes through the aperture (204) of the rigid member (202) in use.

4. A strip according to claim 3, in which the clamping member (210) is attached to a pane of glass (68) and the glass (68) is secured to the window frame by the passage of the clamping member (210) through the aperture (208) in the window pane receiving surface and through a further aperture in the window frame.

5. A strip according to claim 1,2,3 or 4, wherein the rigid member (202) is generally planar.

6. A strip according to any one of claims 1 to 5, wherein the rigid member (202) is substantially trapezium-shaped.

7. A strip according to any one of claims 1 to 6, wherein the aperture (204) in the rigid member (202) is surrounded by a plurality of smaller holes (206).

8. A strip according to any one of claims 3 to 7, including an annular insert provided in the aperture (208) of the rigid member (202) for securing the window pane receiving surface more firmly to the window frame.

9. A strip according to claim 8, wherein the annular insert is integrally formed with the rigid member (202).

10. A strip according to claim 6, wherein the opposite converging sides of the rigid member (202) are provided with chamfered edges (222).

11. A strip according to any one of claims 1 to 10, wherein the rigid member (202) has at least one recess (220) provided at an edge of the aperture (204).

12. A strip according to claim 11, wherein the clamping member (210) includes a protrusion correspondingly sized and positioned for passing through the recess (220), whereafter relative rotation of the clamping member (210) and the rigid member (202) prevents relative longitudinal movement between the clamping member (210) and the rigid member (202).

13. A strip according to any one of claims 2 to 12, in which the moulded material (63,93,103,107,200) is extended to form a closed loop.

14. A strip according to claim 13, in which the length of extruded material (19) beyond the said portion thereof extends from the closed loop.

15. A strip according to any preceding claim, including a plurality of integral formations (33) for securing the strip to the window frame.

16. A strip according to any preceding claim, including an elongate rigid member (95) into which a portion of the strip is fitted.

17. A strip according to claim 16, in which the strip is fitted into the elongate rigid member (95) so as to clamp a pane of glass (68) fitted in the strip.

18. A strip according to claim 16 or 17, in which the elongate rigid member (95) also accommodates a further length of extruded material (81) having a glass pane (58) receiving channel (83).

19. A strip according to claim 16, 17 or 18, in which the rigid member (95) is of substantially H shape.

20. A strip according to any one of the preceding claims, including a channel (23) for receiving a flange (25) of the window frame.

21. A strip according to claim 20, including a rigid reinforcing carrier (31) embedded within the strip in the region corresponding to the channel (23).

22. A strip according to claims 20 or 21, wherein the rigid member (202) extends towards the channel (23) so as to increase the force required to remove the strip from the window frame.

23. A strip according to any one of claims 2 to 22, in which the extruded material (19) includes a limb (43) forming at least a part of a glass pane (58) receiving channel, a portion of the glass pane (58) receiving channel being removed by removal of said portion of the extruded material.

24. A strip according to claim 23, wherein the limb (43) has an embedded rigid member (300) therein for reducing the tendency for the limb (43) to bend as it emerges from an extruder device used to form the strip.

25. A method of forming a sealing, trimming or guiding strip for a window frame, comprising forming a window pane receiving surface having an aperture (208) therein for securing the window pane receiving surface to the window frame, the window pane receiving surface having embedded therein a rigid member (202) that has an aperture (204) therein that is at least partially aligned with the aperture (208) of the window pane receiving surface.

26. A method of forming a sealing, trimming or guiding strip for a window frame, comprising extruding a length of material (19) to form part of the strip, removing a portion of the extruded material along part only of the length thereof, and replacing the said portion with moulded material (63,93,103,107,200) which is moulded onto and thereby connected to the extruded material (63,93,103,107,200); wherein the moulded material (200) forms a window pane receiving surface and includes an aperture (208) for securing the window pane receiving surface to the window frame and wherein the strip further comprises a rigid member embedded in the moulded material and having an aperture (204) therein in at least partial alignment with the aperture (208) in the moulded material.

27. A method according to of claim 25 to 26, in which the strip formed by the method is as claimed in any one of claims 1 to 24.

28. A method of fitting a window pane (68) to a window frame, the method including providing a sealing strip (19) having a channel (23) for receiving a flange (25) of the window frame and a window pane receiving surface having a rigid member (202) embedded therein and an aperture (204,208) extending therethrough, providing a clamping member (210) attached to the window pane (68), fitting the channel (23) onto the flange (25), inserting the clamping member (210) into the aperture (204,208), and inserting a clamping end (214) of the clamping member (210) through an aperture in the window frame to secure the window pane receiving surface to the window frame.

29. A method according to claim 28, wherein the strip is as claimed in any one of claims 1 to 24.
